# EUROPEAN PATENT APPLICATION

(11) **EP 2 495 695 A1**
(43) Date of publication of application: **05.09.2012**
(21) Application number: 12157463.6
(22) Date of filing: 29.02.2012
(51) Int. Cl.: G06Q 20/02, G06Q 20/16, G06Q 20/12, G06Q 20/32

(54) **Method and system for conducting a monetary transaction using a mobile communication device**

(30) Priority: 01.03.2011 US 201113038162
(71) Applicant: Telefonaktiebolaget L M Ericsson (Publ), 164 83 Stockholm (SE)
(72) Inventor: Radia, Nimish, Dublin, CA California 94568 (US); Svensson, Martin, 12629 Hägersten (SE); Gronowski, Kristoffer, Santa Clara, CA California 95054 (US); Xing, Bo, Fremont, CA California 94555 (US); Ton, Andrew, San Jose, CA California 95136 (US)
(74) Representative: HOFFMANN EITLE

(57) **Abstract**

A method and system for facilitating a secure monetary transaction by using a mobile communication device. In one aspect, the present invention provides a convenient and secure mechanism for conducting a monetary transaction by using OpenID, Open Authorization, and information residing on the SIM token of the mobile device to facilitate the transaction.

## Description

### TECHNICAL FIELD

The present invention relates to mobile communication devices, and more particularly, to a method and system for conducting a monetary transaction using a mobile communication device.

### BACKGROUND

Current solutions for mobile payment are often limited to the use of Short Message Service (SMS) or premium SMS. In some cases, integration can be performed with a specific telecommunication operator or a SMS/Payment broker. When greater amounts of money are exchanged over the Internet, transactions are predominantly conducted using credit card settlements. Services such as PayPal use bank account integration. However, in many instances, a physical check is sent to complete a transaction. Most transactions are conducted between a consumer (i.e., an end user) and a provider of goods or services. There are also conventional systems where consumers can exchange money between themselves, such as PayPal. Once money is in a system such as PayPal, the money can be transferred using an identifier for the recipient that, for example, is equivalent to an e-mail address for the recipient. That recipient, in turn, can then spend the money by transacting with a provider.

Another aspect of such monetary transactions and the systems for enabling such transactions that comes into play is that currency exchange rates need to be applied between the parties to the transaction. Credit card companies, for example, have a well-established system in place.

Telecommunication service providers typically have binding contracts with their customers. A post-paid mobile account is quite similar to a credit card account. Similarly, a pre-paid mobile subscription can be viewed as being similar to a debit card service. These assets possessed by telecommunication service providers have opened up opportunities for new payment models over the Internet.

Because increasing amounts of money are being transferred over the Internet, and with increasing frequency, it has become increasingly important for the consumer to retain a degree of control over the transaction.

There are multiple ways that consumers can be notified about a transaction that has occurred. Presently, the most common way is by SMS or e-mail notification. From a user interaction point of view, this is quite limiting, because if the transaction was erroneous in some aspect, the consumer can react only after receiving the notification. In many cases, this may prove to be too late for a timely and effective intervention.

Integration with conventional telecommunication service charging systems is cumbersome. Such integration blocks out many small- and medium-sized businesses, due to the complexities and costs of integration. If the system is to be used for micro transactions, the effort for integration into such a service must require only a small investment in order to obtain a reasonably timely return on investment.

Internet services payment systems are often quite non-secure, because they do not involve a physical credit card. In many instances, it is sufficient to provide the card number, expiration date, and verification code. Vital information can either be intercepted or visually read, thereby rendering such a system vulnerable to fraud. This ultimately results in increased costs to consumers.

Currently, there is no satisfactory mechanism for granting a transaction or for receiving event information when a transaction was conducted and completed, particularly in situations such as periodic subscription transactions for which the consumer is not actively navigating on his/her browser. Moreover, there is a need for payment exchange not only in the direction from a consumer to a service, but also in the reverse direction, i.e., a money flow from a service to a consumer.

It would be beneficial to minimize erroneous transactions and improve on the security of a mobile Internet payment system in such a manner as to reduce fraud and also operational costs. In conventional systems, transaction fees, insurance costs, and fraud add to the operational overhead, which in turn causes infeasibility for micro transactions, because the overhead costs may exceed the actual transaction amounts.

There is also a need to provide new revenue streams and business models on the Internet. Many social networking and gaming services rely purely on an advertisement-based revenue model. Some such services have begun to investigate whether data mining and selling user profiles can provide profitable alternative forms of revenue streams. Most users clicking on advertisements while playing a game are doing so by mistake, thereby resulting in annoyance to the user rather than benefit to the advertiser. Conversely, companies cannot develop games for free, and therefore, they need to generate revenue.

The problem is not a lack of willingness on the part of consumers to pay for services. Rather, the problem relates to the fact that conventional payment systems are cumbersome and perceived as lacking security. Thus, Internet service provides are often forced to use a business model for payment systems that does not provide sufficient revenue.

### SUMMARY

In one aspect, particular embodiments of the disclosed solution provide a method of facilitating a secure monetary transaction between a payor and a payee. The payor uses a mobile device for communicating with the payee over a network. First, a payment request is received from the payee. The payment request includes an amount and information relating to the payor. Then, a payor identification is obtained. The payor identification corresponds to the mobile device used by the payor. Then, an authentication of the payor identification is provided to the payee. The authentication is based on the received information relating to the payor. Then, a payment confirmation is requested from the payor. The requested payment confirmation is received, and the monetary transaction is conducted.

In some embodiments, the step of obtaining a payor identification may include transmitting a request for identifying information to the mobile device used by the payor and receiving a response to the transmitted request. The step of receiving a response to the transmitted request may include receiving a response generated by a Subscriber Identity Module (SIM) token that resides in the mobile device.

In some embodiments, the method may further include the steps of transmitting to the mobile device a request for creditworthiness information relating to the payor and receiving a response to the request generated by the SIM token.

In some embodiments, the step of obtaining a payor identification may include retrieving the payor identification from a database. The step of providing an authentication may include using OpenID to provide an authentication. The step of conducting the monetary transaction may include using Open Authorization (OAuth) to conduct the monetary transaction.

In another aspect, particular embodiments of the disclosed solution provide a server for facilitating a monetary transaction between a payor and a payee. The server is in communication with a mobile device used by the payee and with a network accessible by the payor. The server comprises a processor; a transceiver coupled to the processor; and a memory for storing identification information relating to the mobile device. The memory is coupled to the processor. The server receives a payment request from the payee. The payment request includes an amount of the monetary transaction and identifying information relating to the payor. After the server receives a payment request from the payee, the processor uses the identification information relating to the mobile device to authenticate the identifying information relating to the payor. The processor then causes the transceiver to provide an authentication to the payee. The processor also causes the transceiver to transmit a message to the mobile device. The message includes information provided in the payment request and a request for authorization to pay the requested amount to the payee. The processor then receives a message from the mobile device. The received message includes the requested authorization. The processor then conducts the monetary transaction by forwarding the requested amount to the payee.

In some embodiments, the processor may be further configured to cause the transceiver to transmit a request for identification information to the mobile device; receive a response to the transmitted request for identification information; and store the identification information contained in the received response. The processor may then receive a response to the transmitted request that is generated by a Subscriber Identity Module (SIM) token that resides in the mobile device. The processor may be further configured to cause the transceiver to transmit a request for creditworthiness information relating to the payor to the mobile device and to receive a response to the request for creditworthiness information.

In some embodiments, the processor may be further configured to use OpenID to provide an authentication to the payee. The processor may be further configured to use Open Authorization (OAuth) to conduct the monetary transaction.

In yet another aspect, particular embodiments of the disclosed solution provide a mobile device configured for enabling a user to conduct data communications over a network. The mobile device is in communication with a server residing on the network. The mobile device comprises a processor; a transceiver coupled to the processor; and a memory for storing identification information. The memory is coupled to the processor. When a user of the mobile device requests a monetary transaction with a payee, the processor causes the transceiver to receive a message transmitted from the server. The message includes information relating to the requested monetary transaction, including an amount of the requested monetary transaction, and a request for an authorization to provide a payment of the amount to the payee. The processor then causes the transceiver to transmit a message to the server providing the requested authorization, and to receive a message confirming a completion of the monetary transaction.

In some embodiments, the processor may be further configured to cause the transceiver to transmit to the server identification information retrieved from the memory.

In some embodiments, the memory may include a Subscriber Identity Module (SIM) token. The processor may be further configured such that, if the transceiver receives a request for creditworthiness information relating to the user from the server, the processor retrieves creditworthiness information stored in the SIM token and causes the transceiver to transmit the creditworthiness information to the server.

In some embodiments, the processor may be further configured to cause the transceiver to use OpenID to transmit the message providing the requested authorization.

In still another aspect, particular embodiments of the disclosed solution provide a method of using a mobile device to conduct a secure monetary transaction. First, a request for identification relating to a user of the mobile device is received. Then, a response to the request for identification is transmitted. The identification response is automatically generated by a Subscriber Identity Module (SIM) token residing in the mobile device. Then, a request for payment confirmation is received, and a response to the request for payment confirmation is transmitted. After the response to the request for identification is transmitted and prior to receipt of the request for payment confirmation, a request for creditworthiness information relating to the user may be received. A response to the request for creditworthiness information may be transmitted. The creditworthiness response may be automatically generated by the SIM token.

### BRIEF DESCRIPTION OF THE DRAWINGS

The accompanying drawings, which are incorporated herein and form part of the specification, illustrate various embodiments of the present disclosure and, together with the description, further serve to explain the principles of the disclosure and to enable a person skilled in the pertinent art to make and use the embodiments disclosed herein. In the drawings, like reference numbers indicate identical or functionally similar elements.

FIG. 1 illustrates a logical network architecture of a communication connection between a service provider and a mobile communication device via the Internet, in accordance with exemplary embodiments of the disclosed solution.

FIG. 2A illustrates exemplary information flows and protocols used by the architecture of FIG. 1, in accordance with exemplary embodiments of the disclosed solution.

FIG. 2B illustrates a block diagram of a server as used in the architecture of FIG. 1.

FIG. 2C illustrates a block diagram of a mobile communication device as used in the architecture of FIG. 1.

FIG. 3 illustrates exemplary modules contained within the elements of the architecture of FIG. 1.

FIG. 4 is a flow chart illustrating the steps performed by a telecommunication service operator in a method according to exemplary embodiments of the disclosed solution.

FIG. 5 is a flow chart illustrating the steps performed by a broker or payment service operator in a method according to exemplary embodiments of the disclosed solution.

FIG. 6 is a flow chart illustrating the steps performed by a service provider in a method according to exemplary embodiments of the disclosed solution.

FIG. 7 is a flow chart illustrating the steps performed by a consumer or end user in a method according to exemplary embodiments of the disclosed solution.

### DETAILED DESCRIPTION

Telecommunication service operators utilize a secure charging system, including a physical Subscriber Identity Module (SIM) card or a secure software-based SIM with user credentials, which are more secure than magnetic strips on a credit card or radio-frequency identification (RFID) chips that broadcast with near-field communication (NFC) technology. In this manner, the cost of fraud can be reduced by virtue of an inherent increase in security.

In order to minimize integration complexity, the present solution uses a transport such as Hypertext Transfer Protocol Secure (HTTPS) with known and validatable X.509 certificates.

The foundation of a secure payment system is strong identification of the involved parties. On the end user side, if the transaction is conducted with, or in conjunction with, a mobile SIM-based device, the identity of the end user can be guaranteed by the telecommunication service operator. For cases in which the service provider is not a part of any mobile network standard web of trust, X.509 certificates can be used for identity validation. In many instances, transactions are conducted in conjunction with well-known service providers or brokers, such as Amazon or eBay.

In a particular embodiment, the present solution may include the following steps: First, a service provider conducting commerce with an end user on the Internet can request a strong identification of the end user from the telecommunication service operator, in order to establish a trustful relationship with the end user. Second, the same service provider can use that identification to conduct a financial or monetary transaction, i.e., billing the end user on his pre-paid or post-paid account. Third, prior to completion of the transaction, the system verifies with the end user that the details of the transaction (i.e., amount of deduction and identity of service provider) are correct. Fourth, the end user is prompted to allow the transaction to proceed. Finally, when the payment is settled, the end user can be notified that the transaction has been successfully completed.

Because the system is asynchronous, it can also be used for subscriptions where the service requests new billing events on a periodic basis, such as weekly or monthly. As another example, if the total charge was divided into several installment payments, the system can be used to accommodate this pattern. The system can also be used for various mortgages, and can also accommodate variable payment amounts if the end user chooses to vary the amounts.

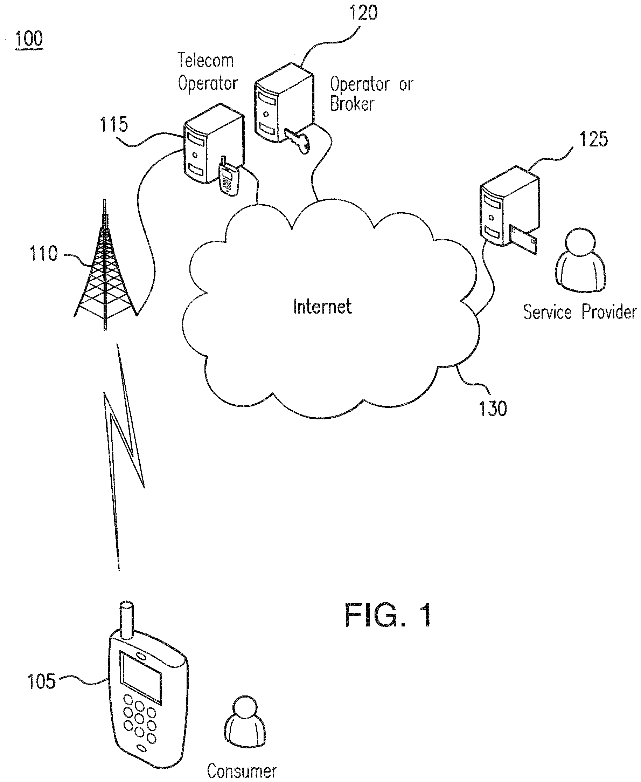

Referring now to FIG. 1, a logical network architecture of a communication connection between a service provider and a mobile communication device via the Internet, in accordance with exemplary embodiments of the disclosed solution, is illustrated. The Internet 130 is depicted as a cloud in the center of the architecture. An end user uses a wireless mobile communication device 105 to communicate with a service provider 125 via the Internet 130. The mobile communication device 105 transmits signals that are received by an antenna 110, e.g., a cellular tower or base station transceiver, which then forwards the transmitted signal to a telecommunication service operator 115. The telecommunication service operator 115 is in communication with the Internet via any standard type of Internet connection. A transaction operator or broker 120, also referred to herein as a payment service, and the service provider 125 are also in communication with the Internet 130 via any standard type of Internet connection.

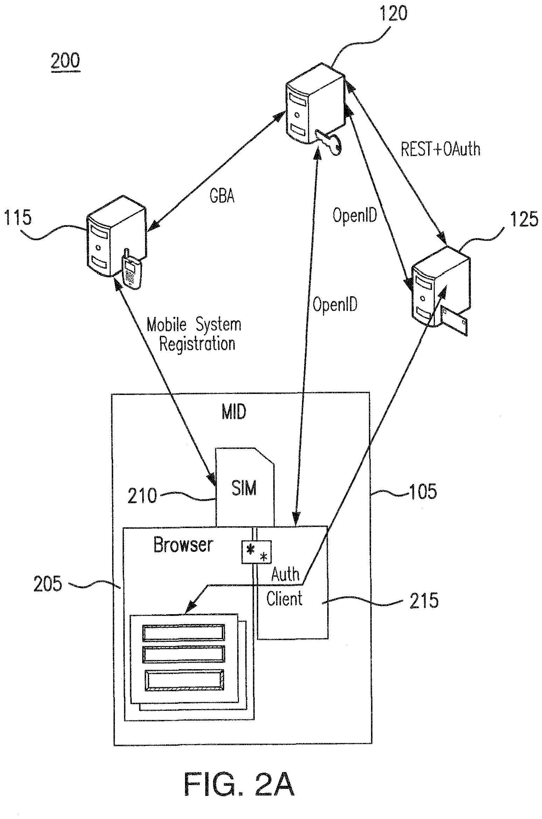

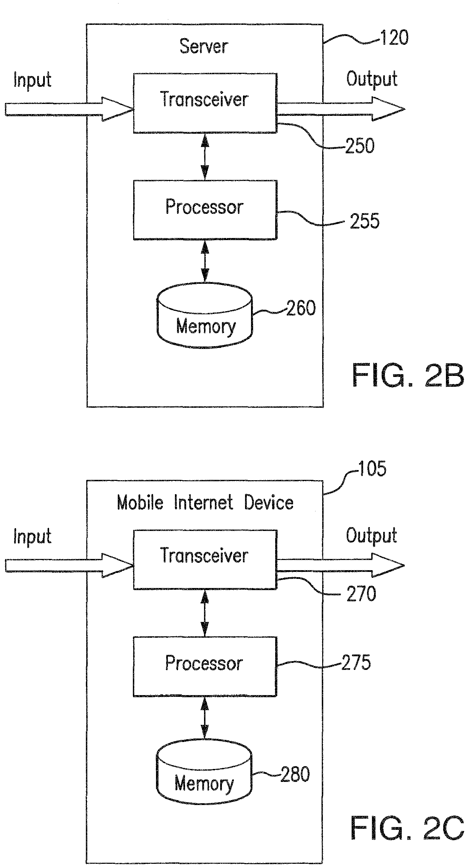

Referring now also to FIGS. 2A and 2C, the mobile communication device 105 includes a transceiver 270, a processor 275, and memory 280. The mobile communication device also includes a SIM token 210 provided by the telecommunication service operator 115. The SIM token 210 can be implemented in either hardware or software. In some implementations, the SIM token 210 may host a pre-paid account for which the telecommunication service operator 115 does not know the identity of the end user; however, the operator 115 does know the amount of the credit on the account.

The mobile communication device 105 also includes a software module 215 for discovering the identity of the service provider 125 in order to authenticate the service provider 125 as part of the monetary transaction to be conducted. The software module 215 may be built as a stand-alone application using a native application programming interface (API) on the device 105, or it can be made more portable as a plug-in to a browser 205 that resides on the device 105. In some embodiments, the OpenID protocol is used for authenticating the identities of the various parties to the transaction.

Referring now also to FIG. 2B, the telecommunication service operator server 115 includes a transceiver 250, a processor 255, and a memory 260. The operator infrastructure is primarily responsible for authenticating an end user, providing Internet connectivity, and, in many cases, delivering traditional services such as voice and SMS. In some implementations, the IMS architecture may be used, because it is already being deployed and is expected to reach a mass market with the rollout of the 3GPP Long Term Evolution (LTE).

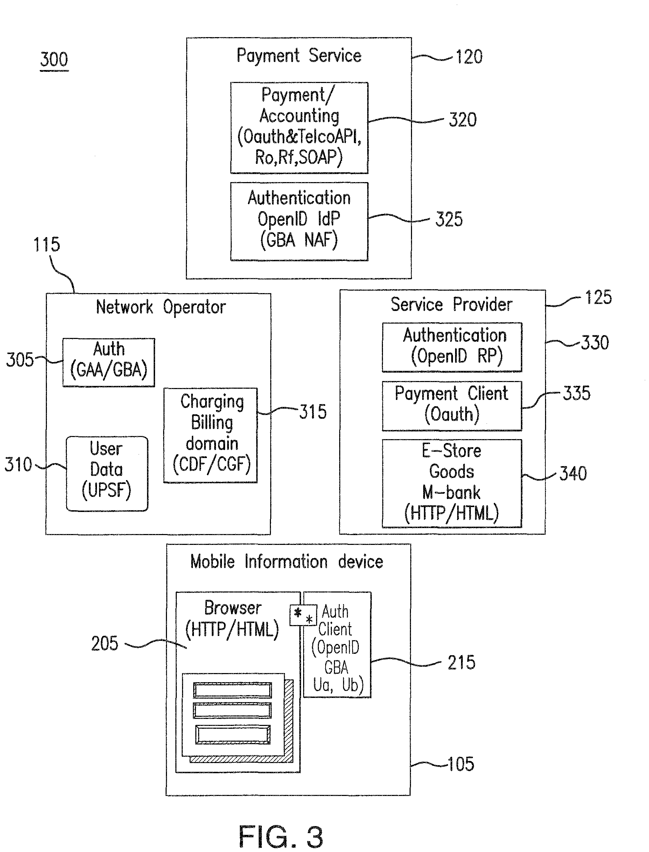

Referring now also to FIG. 3, the telecommunication service operator (also referred to herein as the network operator) 115 includes an authentication module 305, a user data module 310 for storing end user data corresponding to the mobile device 105, and a charging/billing domain module 315. The associated broker or payment service 120 includes a payment/accounting module 320 and an authentication module 325. The service provider 125 includes an authentication module 330, a client payment module 335, and an e-store module 340. These modules may be implemented as software modules within the respective processors or memories of the corresponding nodes.

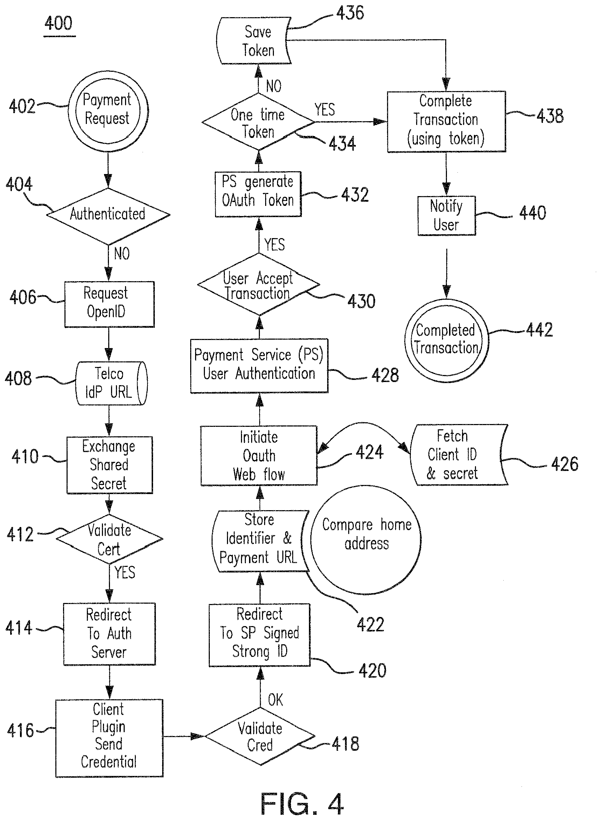

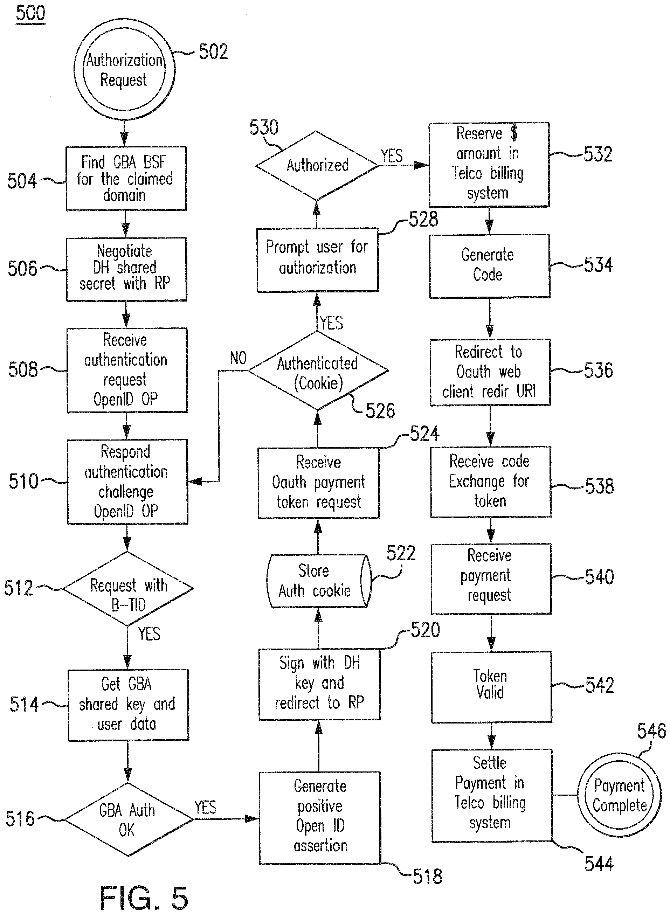

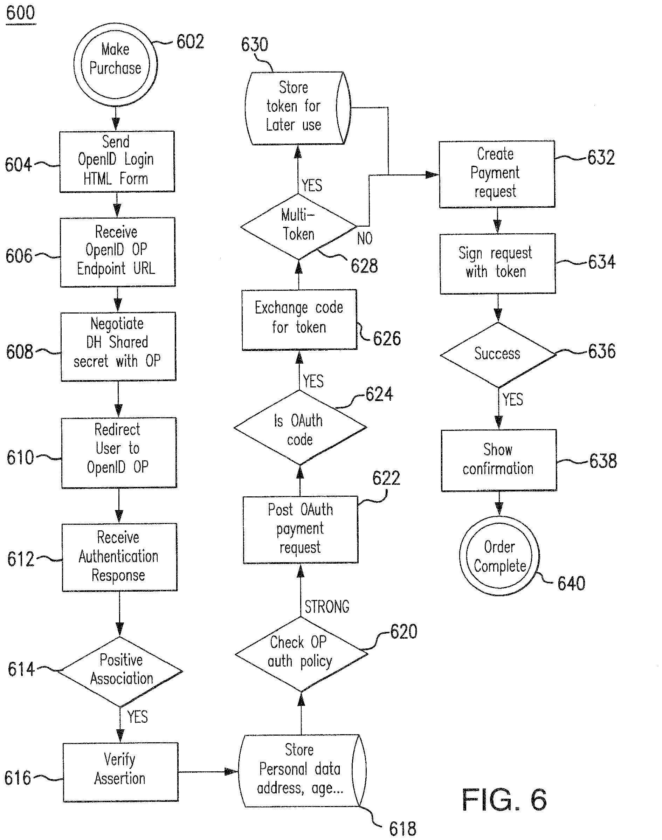

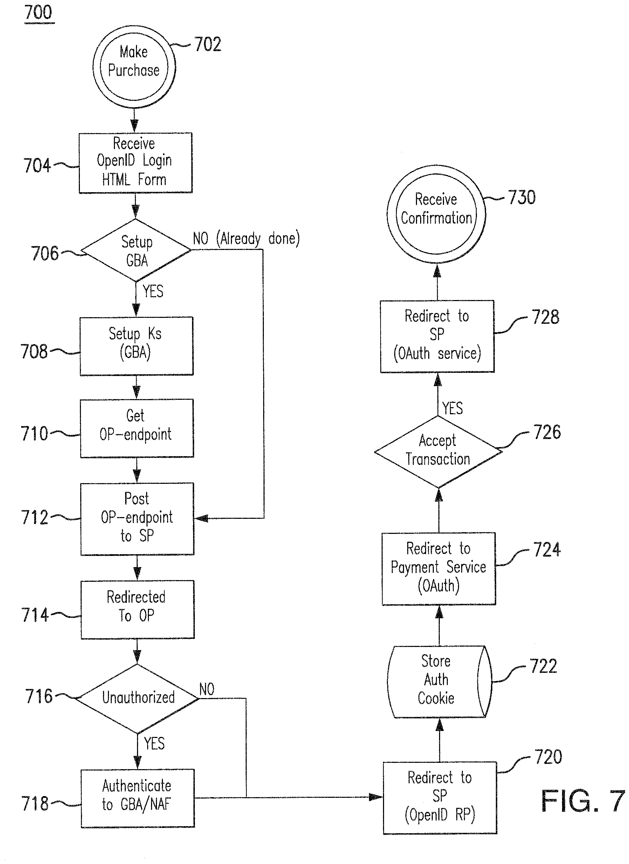

Referring now to FIGS. 4, 5, 6, and 7, several flow charts illustrate a method of conducting a monetary transaction in accordance with particular embodiments of the disclosed solution. In the flow chart of FIG. 4, the steps are being performed by the telecommunication service operator 115. In the flow chart of FIG. 5, the steps are being performed by the payment service 120. In the flow chart of FIG. 6, the steps are being performed by the service provider 125. In the flow chart of FIG. 7, the steps are being performed by the end user, or consumer, using the mobile device 105.

The process begins when a consumer or end user makes a purchase from a service provider 125, corresponding with steps 602 and 702, for which the service provider 125 will collect a payment from the end user. The service provider 125 then sends a payment request to the telecommunication service operator 115 (step 402), which checks to see at step 404 whether the end user has been authenticated. If not, at step 406, the telecommunication service operator 115 requests an OpenID flow with the mobile device 105 and obtains the OpenID Provider endpoint URL at step 408.

The service provider 125 sends an OpenID login HTML form (i.e., step 604) to the end user's mobile device 105, which receives the OpenID login HTML form in step 704.

When an IMS implementation is used, authentication information about an end user can be verified by using the Generic Bootstrapping Architecture (GBA) standard. The mobile device 105 checks to see whether GBA is set up at step 706. If it is not yet set up, the mobile device 105 sets up a GBA application-specific key at step 708 and obtains the OpenID Provider endpoint from the telecommunication service operator 115 at step 710. The mobile device then posts the OpenID Provider endpoint to the service provider 125 at steps 606 and 712. When the end user enters a service provider site on the Internet, the end user is prompted to identify himself/herself. The authentication module 215 recognizes the identification request and thereby initiates an OpenID flow with the operator. Since the operators are trusted entities, they would typically already have a verified X.509 certificate that the service provider could verify, which the operator can use to confirm that the consumer is indeed a valid user. This, in turn, provides the service provider with a verified identity, which can be used for charging the consumer at a later stage.

The only requirement is that the operator 115 provides a unique identifier for the end user. Accordingly, information such as the telephone number, name, and address of the end user need not be revealed. A policy at the telecommunication service operator site can mandate that the only shipment information allowed to be revealed is that which points to the current subscriber (i.e., end user) name and billing address. In this manner, a service provider 125 can query and, given end user consent, the operator 115 would return the necessary shipping information using standard OpenID attribute exchange or the simple registration extension specifications.

In an alternative implementation, the end user identifier may contain the PSTN telephone number. In this implementation, the mobile device 105 need not include the authorization module 215 in order to automate the flow.

The telecommunication service operator 115 can also indicate a level of authentication based on whether the mobile device 105 has a hardware SIM or a software SIM. When using the OpenID protocol, a framework extension known as Provider Authentication Policy Extension may be used. In addition, the address of the representational state transfer (REST) HTTP-based payment system is generally provided in conjunction with the authentication response to the service provider 125. In this manner, the charging endpoint location is transferred.

In particular embodiments, the broker or payment system 120 is responsible for conducting the transactions between the service provider 125 and the end user's mobile device 105, and for ensuring that adequate credit is available once the transaction is completed. To conduct the transaction, the payment system 120 first receives an authorization request at step 502. The payment system 120 begins authenticating the end user by first finding the GBA Bootstrapping Server Function (BSF) for the claimed domain at step 504, and then, at step 506, the payment system 120 negotiates a shared secret with the telecommunication service operator 115 using OpenID. Then, at step 508, the payment system 120 then receives an authentication request from the OpenID Provider identified by the telecommunication service operator 115, and the payment system responds to the authentication request at step 510. At step 512, the payment system 120 checks whether the request includes a BSF transaction identifier (B-TID), and if it does, the payment system uses this information to obtain a GBA shared key and user data. At step 516, the payment system 120 checks whether the GBA authentication is good, and if it is, the payment system 120 generates a positive OpenID assertion at step 518, and then signs that assertion with the Diffie-Hellman (DH) key corresponding to the shared secret and redirects the end user's mobile device 105 to the telecommunication service operator 115 at step 520. The payment system 120 then stores a cookie corresponding to the authentication at step 522.

In particular embodiments, OAuth technology can be used advantageously at this stage of the process. At step 524, the payment system 120 receives a request for an OAuth token relating to the payment to be made. The payment system 120 checks the cookie that was stored at step 522 to make sure that the authentication is good, and if it is, then the payment system 120 prompts the end user's mobile device 105 for authorization to conduct the transaction at step 528. The payment system 120 checks whether an authorization has been received at step 530, and if an authorization has been received, the payment system 120 reserves the appropriate amount of money from an account associated with the end user and the telecommunication service operator 115 at step 532. The payment service 120 generates a code corresponding to the transaction at step 534, and then redirects to the service provider at step 536. At step 538, the payment system 120 exchanges the code generated at step 534 for an OAuth token. At step 540, the payment system 120 receives a payment request from the service provider 125, and then the payment system 120 checks whether the OAuth token is valid at step 542. Upon validation of the OAuth token, the payment system settles the payment in the telecommunication service operator account at step 544, and the payment is completed at step 546.

The token that is issued can be time-constrained, or the token can be a permanent token that is valid until revocation by the end user. In this manner, periodic payments can be made. The token is configured to include the parameters of payments, such as amounts and timing.

In alternative embodiments, Simple Object Access Protocol (SOAP) based web services may be used in lieu of OAuth technology.

In particular embodiments, the service provider 125 is responsible for implementing an OpenID Relay Proxy endpoint, which collects the OpenID provider endpoint of the interacting user at step 606. In order for the service provider 125 to conduct a transaction, the service provider 125 must have an account with the telecommunication service operator 115. The service provider 125 registers an OAuth client account, including a client identification, a client Secret, and a callback to its service, at the telecommunication service operator 115. The OAuth client account is then associated with a financial account administered by the service provider 125. In the event that the end user is using a different telecommunication service operator 115, it is presumed that all telecommunication service operators have roaming and clearance agreements with each other. Alternatively, a third party operator or broker 120 that has established the necessary relationships with the telecommunication service operators and the service provider 125 can conduct the transaction, as described above.

The service provider exchanges a shared secret, in accordance with OpenID, with the operator infrastructure system, in correspondence with steps 410 and 608. Then, the service provider 125 redirects the end user's mobile device 105 to the telecommunication service operator 115 at steps 414 and 610 to provide the end user's credentials. At step 612, the authorization module 215 enables the mobile device 105 to provide the requested credentials to the service provider 125 without any additional action by the end user. In the event that the service provider 125 requests any additional information, such as name or address, the end user may be required to take action to provide the additional information, for example, by authorizing the telecommunication service operator 115 to reveal the requested information to the service provider 125.

After accepting the authentication request from the operator 115, the end user mobile device 105 is redirected back to the service provider 125 at steps 420 and 720. In the redirection, at step 422, the telecommunication service operator 115 adds the requested information, which is signed using the shared secret between the operator 115 and the service provider 125. In this manner, the service provider 125 receives an identifier of the end user that can be used for charging purposes. The service provider 125 checks the received identifier at step 614, and verifies the information contained therein at step 616. The mobile device 105 stores a cookie corresponding to the authentication at step 722.

The telecommunication service operator 115 then initiates an OAuth data flow at step 424 by retrieving the client identification and shared secret at step 426. The service provider 125 then acquires an OAuth token by first ensuring that the operator 115 has a strong authorization policy at step 620, then posting an OAuth payment request at step 622, then checking whether it has the necessary OAuth code at step 624, and then exchanging that code for the OAuth token at step 626. The service provider 125 uses the OAuth token to post the end user identifier and the charging endpoint to the charging REST service. At step 724, the end user mobile device 105 is redirected to the operator 115, which authenticates the end user with the payment service 120 at step 428. Then, the end user mobile device 105 is prompted, in accordance with the OAuth flow, to accept the transaction at steps 726 and 430, and to indicate whether the transaction is a one-time transaction or of a periodic nature at step 434. The operator 436 saves the token at step 436. The service provider 125 checks whether the token is a one-time token or a multi-token at step 628, and then stores the token at step 630. The service provider 125 then creates the payment request at step 632 and signs the transaction request with the OAuth token at step 634. The end user decides whether to accept the transaction at step 726, and upon deciding to accept the transaction, is redirected to the service provider 125 at step 728. The service provider 125 determines that the transaction is successful at steps 636 and 438, and provides a confirmation at step 638. The operator 115 notifies the end user that the transaction has been successfully completed at step 440 and 730, and the process is completed at steps 442 and 640.

In many cases, the service provider's mobile commerce site can display information regarding the thing being purchased, and the site can then redirect an end user to the operator billing service for approval. But, for reoccurring transactions or for settlement confirmation, an asynchronous notification mechanism is required. An OpenID-based push service can be used for this function. Alternatively, a push service using a different identifier can be used. The push service is generally provided by the telecommunication service operator and can be used to open the browser 205 on the mobile device 105 and direct the user to the REST OAuth-based billing system. In this manner, an end user can approve asynchronous billing events.

As an example, a service provider 125 may provide an Internet Protocol Television (IPTV) service and a video on-demand service to the end user. A token for monthly payments for the IPTV service can be handled by the system, while video on-demand events are generally one-time-only transactions.

The service provider 125 is the entity that receives credits collected by the telecommunication service operator 115, which may operate one or more accounts corresponding to the service provider 125. Accordingly, the service provider 125 will generally pay a transaction fee to the telecommunication service operator 115, similarly as it would pay a credit card company in a conventional billing system. However, the amount of the transaction fee may be significantly lowered, due to the lower operational cost and the reduced rate of fraud afforded by the solutions described herein.

With regard to system security, to the extent that the system uses OpenID and OAuth, the security threats and weaknesses of the system correspond to those protocols. Generally, Transport Layer Security (TLS) encryption is used for node-to-node communication, similarly as with many communications on the Internet. Each receiving endpoint produces a server certificate that is signed by a trusted certificate authority, such as, for example, Verisign, which maintains a private key and signs every transmitted HTTP message with the private key. Public keys can be published on the Internet and verified by the web of trust.

A higher level of trust for a node-to-node transmission can be achieved by the operator 115 if every user receives an X.509 client side certificate. Such a certificate can be stored on the SIM and used for signing of all HTTP requests sent by the mobile device 105 to Internet HTTPS servers. The service provider 125 can request a public key issued by the telecommunication service operator from the operator infrastructure at the same time as the service provider 125 is receiving other optional OpenID information. In this manner, security is further increased, thereby minimizing the potential of fraud and lowering the operational costs of the system.

Examples of applications for a system for enabling a monetary transaction as described above include the following: user-to-user payments; a gambling or gaming service; voting services; premium-paid customer support services, micro-banking system for developing countries, and periodic e-magazine subscription services.

The following is an example scenario for a user-to-user payment. In this scenario, user Alice wants to transfer $10 to Bob, with whom she is a Facebook "friend." The scenario assumes that Facebook has added an option to conduct monetary transactions in accordance with at least one embodiment disclosed above. Alice navigates to Bob's home page, where she clicks on a button that initiates a process of conducting a monetary transaction (step 1). Step 2 is authentication of Alice's identity. In step 3, Alice logs in to Facebook. Having logged in, Alice provides her OpenID URL to enable Facebook to associate her with an identity. In step 4, Facebook contacts the telecommunication service operator OpenID provider, and then in step 5, Facebook and the OpenID provider exchange a shared secret, which will enable Facebook to verify her signature after Alice proves her identity.

In step 6, Facebook validates the OpenID provider's certificate, to ensure that the OpenID provider is a real entity with whom Facebook already has an account, thereby ascertaining that it can trust that the money will actually be there when the transaction is completed.

In step 7, Facebook redirects Alice to the OpenID provider, and in step 8, Alice transmits her credentials to the OpenID provider. Because Alice has an OpenID client module installed on her mobile device, the client module detects the authentication request from the OpenID provider, and performs a GBA-based authentication automatically. This enables the OpenID provider to verify that the mobile device used by Alice physically contains Alice's SIM card. Because Alice is very cautious about security, she has configured the client to ask for a personal identification number (PIN), in order to validate the fact that Alice is the actual person that is using Alice's mobile device at the time of a purchase.

In step 9, the login credentials are validated between the OpenID provider and the telecommunication service operator by GBA. During this step, the OpenID provider generates a marker cookie corresponding to the current session. In this manner, when the time comes for Alice to confirm the transaction, only the current identity of Alice will be approved as a payment originator identity.

In step 10, the telecommunication service operator redirects Alice back to Facebook. Facebook receives Alice's claimed strong identity, supported by her SIM, and Facebook uses this identity and the shared secret received in step 5 to validate its signature. The OpenID provider uses the standard extensions to communicate information from Alice's login credentials and the REST endpoint of the payment service to Facebook. In the event that the transaction involves a physical delivery of goods to a physical address, the purchaser's address is also communicated as an extension, to ensure that the goods are shipped to a trusted location.

In step 11, Facebook stores Alice's identity and the payment REST URI. Then, in step 12, Facebook directs Alice to the payment URI, where an OAuth authorization sequence approves the actual money transfer. In step 13, the payment service user authentication occurs, beginning with an OpenID login between the OpenID provider and the payment service, if these are different entities.

In step 14, the payment authorization occurs. Facebook provides its client identification on OAuth, so that the money amount deducted can be deposited into the correct account at the payment service. The amount of a deposit is requested as an OAuth parameter. The payment service then sends an authorization grant page to Alice to inquire whether she will confirm a deposit in the specified amount to Facebook, which promises to transfer the money to Facebook user Bob. This step may occur through the use of an OAuth "Getting payment access" token, which can also include an indication as to whether the token is for a one-time payment or for a reoccurring payment. Alice sends her confirmation to indicate that she authorizes the payment.

In step 15, Facebook retrieves the OAuth token, which is used to withdraw the specified amount of money from Alice's account. Then in step 16, Facebook determines that the retrieved OAuth token is for a one-time payment, and therefore, in step 17, Facebook determines that the token need not be saved. In step 18, Facebook contacts the REST endpoint to claim the money, and then credits Bob's account.

In step 19, Alice is notified of a successful withdrawal by Facebook. If Bob wishes to use the money as a Facebook virtual currency, the process is ended. However, if Bob wishes to withdraw the money from Facebook, then the entire process is repeated in order to transfer the money from Facebook to Bob's telecommunication service operator's payment service.

When handling a transaction between two users operating on different operator networks, an inter-exchange service may be utilized.

While various embodiments have been described above, it should be understood that they have been presented by way of example only, and not limitation. Thus, the breadth and scope of the present disclosure should not be limited by any of the above-described exemplary embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it may be omitted, the order of the steps may be re-is contemplated that some steps may be added, some steps arranged, and some steps may be performed in parallel.

## Claims

1. A method of facilitating a secure monetary transaction between a payor and a payee, the payor using a mobile device for communicating with the payee over a network, the method comprising:
receiving a payment request from the payee, the payment request including an amount and information relating to the payor;
obtaining a payor identification, the payor identification corresponding to the mobile device used by the payor;
providing to the payee an authentication of the payor identification based on the received information relating to the payor;
requesting a payment confirmation from the payor;
receiving the requested payment confirmation; and
conducting the monetary transaction.

2. The method of claim 1, wherein the step of obtaining a payor identification includes transmitting a request for identifying information to the mobile device used by the payor and receiving a response to the transmitted request.

3. The method of claim 2, wherein the step of receiving a response to the transmitted request includes receiving a response generated by a Subscriber Identity Module (SIM) token that resides in the mobile device.

4. The method of claim 3, further comprising the steps of transmitting to the mobile device a request for creditworthiness information relating to the payor and receiving a response to the request generated by the SIM token.

5. The method of claim 1, wherein the step of obtaining a payor identification includes retrieving the payor identification from a database.

6. The method of claim 1, wherein the step of providing an authentication includes using OpenID to provide an authentication.

7. The method of claim 1, wherein the step of conducting the monetary transaction includes using Open Authorization (OAuth) to conduct the monetary transaction.

8. A server for facilitating a monetary transaction between a payor and a payee, the server in communication with a mobile device used by the payee and with a network accessible by the payor, the server comprising:
a processor;
a transceiver coupled to the processor; and
a memory for storing identification information relating to the mobile device, the memory coupled to the processor,
wherein, after the server receives a payment request from the payee, the payment request including an amount of the monetary transaction and identifying information relating to the payor, the processor is configured to:
use the identification information relating to the mobile device to authenticate the identifying information relating to the payor;
cause the transceiver to provide an authentication to the payee;
cause the transceiver to transmit a message to the mobile device, the message including information provided in the payment request and a request for authorization to pay the requested amount to the payee;
receive a message from the mobile device, the received message including the requested authorization; and
conduct the monetary transaction by forwarding the requested amount to the payee.

9. The server of claim 8, wherein the processor is further configured to:
cause the transceiver to transmit a request for identification information to the mobile device;
receive a response to the transmitted request for identification information; and
store the identification information contained in the received response.

10. The server of claim 9, wherein the processor is further configured to receive a response to the transmitted request that is generated by a Subscriber Identity Module (SIM) token that resides in the mobile device.

11. The server of claim 10, wherein the processor is further configured to cause the transceiver to transmit a request for creditworthiness information relating to the payor to the mobile device and to receive a response to the request for creditworthiness information.

12. The server of claim 8, wherein the processor is further configured to use OpenID to provide an authentication to the payee.

13. The server of claim 8, wherein the processor is further configured to use Open Authorization (OAuth) to conduct the monetary transaction.

14. A mobile device configured for enabling a user to conduct data communications over a network, the mobile device in communication with a server residing on the network, the mobile device comprising:
a processor;
a transceiver coupled to the processor; and
a memory for storing identification information, the memory coupled to the processor,
wherein the processor is configured such that, when a user of the mobile device requests a monetary transaction with a payee, the processor causes the transceiver to:
receive a message transmitted from the server, the message including information relating to the requested monetary transaction, including an amount of the requested monetary transaction, and a request for an authorization to provide a payment of the amount to the payee;
transmit a message to the server providing the requested authorization;
and
receive a message confirming a completion of the monetary transaction.

15. The mobile device of claim 14, wherein the processor is further configured to cause the transceiver to transmit to the server identification information retrieved from the memory.

16. The mobile device of claim 14, wherein the memory includes a Subscriber Identity Module (SIM) token.

17. The mobile device of claim 16, wherein the processor is further configured such that, if the transceiver receives a request for creditworthiness information relating to the user from the server, the processor retrieves creditworthiness information stored in the SIM token and causes the transceiver to transmit the creditworthiness information to the server.

18. The mobile device of claim 14, wherein the processor is further configured to cause the transceiver to use OpenID to transmit the message providing the requested authorization.

19. A method of using a mobile device to conduct a secure monetary transaction, comprising:
receiving a request for identification relating to a user of the mobile device;
transmitting a response to the request for identification, the identification response automatically generated by a Subscriber Identity Module (SIM) token residing in the mobile device;
receiving a request for payment confirmation; and
transmitting a response to the request for payment confirmation.

20. The method of claim 19, further comprising:
after transmitting the response to the request for identification and prior to receiving the request for payment confirmation, receiving a request for creditworthiness information relating to the user; and
transmitting a response to the request for creditworthiness information, the creditworthiness response automatically generated by the SIM token.
